# FASCICULE DE BREVET EUROPEEN

(11) **EP 0 769 632 B1**
(45) Date de publication et mention de la délivrance du brevet: **21.11.2001**
(21) Numéro de dépôt: 96114785.7
(22) Date de dépôt: 16.09.1996
(51) Int. Cl.: F16D 13/75

(54) **embrayage à friction à dispositif de rattrapage de jeu, notamment pour véhicule automobile**
Reibungskupplung mit Nachstellvorrichtung, insbesondere für Kraftfahrzeuge
Friction clutch with adjusting device, specially for automotive vehicles

(30) Priorité: 21.09.1995 FR 9511090
(43) Date de publication de la demande: 23.04.1997
(73) Titulaire: VALEO, 75017 Paris (FR)
(72) Inventeur: Thirion de Briel, Jacques, 92700 Colombes (FR); Blard, Michel, 92130 Issy les Moulineaux (FR)
(74) Mandataire: Gamonal, Didier

(56) Documents cités:
- FR-A- 2 424 442
- US-A- 5 320 205

## Description

La présente invention concerne un embrayage à friction, notamment pour véhicule automobile, et se rapporte plus particulièrement à un embrayage équipé d'un dispositif de rattrapage du jeu dû à l'usure des garnitures de friction, ledit dispositif opérant continûment au fur et à mesure de l'usure desdites garnitures.

Un embrayage à friction classique comporte généralement un plateau de réaction, éventuellement en deux parties pour formation d'un volant amortisseur, calé en rotation sur un premier arbre, usuellement un arbre menant tel que le vilebrequin du moteur à combustion interne, et supportant par sa périphérie externe un couvercle auquel est rattaché au moins un plateau de pression.

Le plateau de pression est solidaire en rotation du couvercle et du plateau de réaction tout en pouvant se déplacer axialement sous la sollicitation de moyens élastiques à action axiale commandés, généralement un diaphragme métallique prenant appui sur le couvercle, tandis qu'un disque de friction, portant des garnitures de friction à sa périphérie externe et solidaire en rotation d'un arbre, usuellement un arbre mené tel que l'arbre d'entrée de la boîte de vitesses, est intercalé entre le plateau de pression et le plateau de réaction de façon à être serré entre eux lorsque l'embrayage est en position d'engagement.

Le diaphragme commande le déplacement axial du plateau de pression lorsqu'il est actionné par une butée de débrayage.

Au cours de la durée de vie d'un tel embrayage, les garnitures de friction ainsi que les contre-matériaux, plateau de pression et plateau de réaction, s'usent, ce qui provoque une variation de la force de serrage entre le disque de friction, d'une part, et les plateaux de pression et de réaction, d'autre part, en raison des modifications des conditions de travail du diaphragme. La course d'embrayage varie également, ainsi que la force nécessaire pour débrayer. En dotant un tel embrayage d'un dispositif de rattrapage du jeu dû à l'usure des garnitures, on évite ces inconvénients.

On a déjà proposé, selon le document FR-A-2 424 442, de réaliser un dispositif de rattrapage en disposant entre le diaphragme et le plateau de pression deux bagues annulaires portant des rampes complémentaires, une première bague annulaire étant fixe en rotation par rapport au plateau de pression, la seconde étant déplaçable en rotation, par rapport à celui-ci et à la première, le déplacement relatif circonférentiel des deux bagues conduisant, du fait des rampes complémentaires qu'elles portent, à un écartement des bagues dans le sens axial compensant ladite usure, cet écartement simulant une augmentation de l'épaisseur axiale du plateau de pression. Pour son déplacement relatif en rotation, la seconde bague est munie à sa périphérie d'un secteur denté dont les dents engrènent avec une vis sans fin disposée de manière tangentielle et montée à rotation sur un axe porté par le couvercle de l'embrayage ; la vis sans fin est susceptible d'être entraînée en rotation, par l'intermédiaire d'un accouplement unidirectionnel, par un tambour porté par le même axe qui porte la vis sans fin, lequel tambour est, en cas d'usure des garnitures du disque de friction, entraîné lui-même en rotation par une patte ménagée à la périphérie du diaphragme qui coopère avec les bords d'une encoche que présente le tambour à sa périphérie ; l'accouplement unidirectionnel est disposé en sorte que la vis sans fin est entraînée par le tambour, qui constitue en quelque sorte une pièce d'armement du dispositif, lorsque celui-ci est lui-même entraîné en rotation par la patte du diaphragme lors du débrayage, la rotation de la vis sans fin conduisant à une rotation de la seconde bague, comme cela a été dit ci-dessus.

Un accouplement unidirectionnel disposé entre la vis sans fin et l'axe qui la supporte permet à celle-ci de conserver sa position en rotation après chaque réglage.

Un tel dispositif, selon le document FR-A-2 424 442, présente les inconvénients suivants : la pièce d'armement ou tambour est en principe déplacée en rotation, dans un sens et dans l'autre, par la patte du diaphragme qui coopère avec les deux bords de son échancrure dont la distance circonférentielle correspond à la course de la patte du diaphragme lors d'une opération de débrayage ; or, ladite pièce d'armement n'étant pas maintenue en place fermement dans le sens de rotation qui usure des garnitures, compte tenu des vibrations auxquelles est soumis l'embrayage, la pièce d'armement peut être amenée à se déplacer dans ledit sens ; dans ces conditions, lors de l'opération de débrayage suivante, un jeu axial est rattrapé alors qu'il n'y a pas eu usure ; on comprendra aisément que le fonctionnement de l'embrayage, dans ces conditions, n'est pas du tout satisfaisant, cela pouvant conduire à une situation dans laquelle le débrayage est impossible. Par ailleurs, en ce qui concerne la rotation de la pièce d'armement dans le sens qui correspond au rattrapage proprement dit du jeu dû à l'usure, celle-ci est théoriquement empêchée par l'accouplement unidirectionnel disposé entre la pièce d'armement et la vis sans fin elle-même bloquée en rotation par les dents de la seconde bague qui est sous la charge du diaphragme ; l'accouplement unidirectionnel ayant été choisi du type à ressort hélicoïdal et fonctionnant par frottement dû, dans un sens, à ses spires expansées, là encore, du fait des vibrations, ce blocage n'est pas parfaitement assuré.

La présente invention a pour but de pallier ces inconvénients.

Selon l'invention, un embrayage à friction, notamment pour véhicule automobile, du genre comportant un plateau de réaction destiné à être calé en rotation sur un arbre menant, un disque de friction (6), portant à sa périphérie externe des garnitures de friction (7), destiné à être calé en rotation sur un arbre mené, un plateau de pression (1), un couvercle (2) fixé sur le plateau de réaction, des moyens élastiques à action axiale (3) agissant entre, d'une part, le couvercle (2) et, d'autre part, le plateau de pression (1) par l'intermédiaire de moyens d'appui (14), le plateau de pression (1) étant solidaire en rotation du couvercle (2) tout en pouvant se déplacer axialement par rapport à lui et étant soumis à l'action de moyens élastiques de rappel (5) rappelant le plateau de pression (1) axialement vers le couvercle (2), ledit embrayage comportant également un dispositif de rattrapage de jeu (10) comprenant des moyens à rampes (11) disposées circonférentiellement, placés axialement entre les moyens d'appui (14) et le plateau de pression (1) et adaptés à être entraînés en rotation grâce à une denture (18) qu'ils portent à leur périphérie et avec laquelle coopère une vis sans fin (13) disposée tangentiellement, caractérisé par le fait que sont prévus :
- des moyens d'entraînement en rotation (20, 45) de la vis sans fin (13) rendus opérationnels par l'usure des garnitures de friction (7) lorsque l'embrayage est embrayé,
- des moyens anti-retour (20, 39) empêchant la vis sans fin (13) de tourner dans le sens contraire de celui dans lequel elle est entraînée en rotation par les moyens d'entraînement en rotation (20, 45) lorsqu'ils sont opérationnels,
- et par le fait que la vis sans fin (13) est montée à coulissement selon son axe en étant soumise à l'action d'un moyen élastique dit de rattrapage (30), et se déplace axialement lorsqu'elle est entraînée en rotation par l'usure des garnitures de friction (7), chargeant ainsi le moyen élastique de rattrapage, ladite charge du moyen élastique de rattrapage (30) croissant avec l'usure des garnitures de friction (7),
- un déplacement axial de la vis sans fin en sens inverse étant obtenu par action du moyen élastique de rattrapage (30) lorsque sa charge est suffisamment élevée pour surmonter l'effort axial dû aux moyens élastiques de rappel (5) auxquels sont soumis lesdits moyens à rampes (11), l'embrayage étant débrayé, ce déplacement entraînant en rotation circonférentielle lesdits moyens à rampes (11).

Avantageusement, les moyens élastiques à action axiale sont constitués par un diaphragme ; le diaphragme est solidarisé au couvercle par des colonnettes.

De préférence, les moyens à rampes sont constitués d'un anneau présentant dès rampes inclinées et réparties circonférentiellement ; le plateau de pression présente des plots ou des rampes destinés à coopérer avec les rampes des moyens à rampes.

Avantageusement, le moyen élastique de rattrapage est un ressort Hélicoïdal entourant un axe qui porte la vis sans fin.

De préférence, l'axe portant la vis sans fin et le ressort hélicoïdal est supporté par deux ailes d'un support.

Selon une première forme de réalisation, le support est porté par le diaphragme ; les moyens d'entraînement en rotation de la vis sans fin sont constitués par une roue à rochet solidaire de l'axe qui porte la vis sans fin et qui est adaptée à coopérer avec une lame portée par le couvercle ; lesdites rampes des moyens à rampes sont alternées circonférentiellement avec des zones d'appui constituant lesdits moyens d'appui pour le diaphragme.

Selon une variante de réalisation, le support est porté par les moyens d'appui ; les moyens d'entraînement en rotation de la vis sans fin sont constitués par une roue à rochet solidaire de l'axe qui porte la vis sans fin et munie sur sa face transversale de dents inclinées circonférentiellement coopérant avec des dents conjuguées portées par la face transversale en regard d'une noix montée tournante sur ledit axe et adaptée à être entraînée en rotation par l'extrémité d'un levier articulé sur le support et dont l'autre extrémité coopère avec une patte radiale du diaphragme.

Avantageusement, les moyens anti-retour sont constitués par un criquet qui coopère avec la roue à rochet.

Pour mieux faire comprendre l'objet de l'invention, on va en décrire maintenant, à titre d'exemples, purement illustratifs et non limitatifs, des modes de réalisation représentés sur les dessins annexés.
- la figure 1 est une vue partielle en coupe d'un embrayage équipé d'un dispositif de rattrapage de jeu selon l'invention ;
- la figure 2 est une vue partielle en plan de l'embrayage de la figure 1 partiellement coupé et arraché ;
- la figure 3 est une vue partielle en coupe du plateau de pression et des moyens à rampes de l'embrayage des figures 1 et 2 ;
- les figures 4 à 6 montrent le support du dispositif de rattrapage, équipé de l'organe élastique : la figure 4 est une vue en plan, la figure 5 est une vue de dessous par rapport à la figure 4, et la figure 6 est une coupe selon VI-VI de la figure 4 ;
- les figures 7 à 9 montrent l'organe élastique seul dans les positions où il est représenté, respectivement, aux figures 5, 4 et 6 ;
- la figure 10 est une vue partielle en perspective montrant les moyens à rampes ;
- les figures 11 et 12 sont des vues en coupe de la figure 10, respectivement selon les lignes XI-XI et XII-XII de cette figure ;
- les figures 13A à 13D montrent partiellement en coupe diverses positions des éléments constitutifs de l'embrayage ; sur la figure 13A l'embrayage est embrayé, garnitures neuves ; sur la figure 13B l'embrayage est débrayé, garnitures neuves ; sur la figure 13C l'embrayage est embrayé garnitures usées ; sur la figure 13D l'embrayage est débrayé, garnitures usées, jeu rattrapé ;
- les figures 14 et 15 sont des vues partielles en perspective, respectivement légèrement de droite et légèrement de gauche par rapport au support, d'une variante de dispositif de rattrapage de jeu selon l'invention ;
- les figures 16 à 22 montrent une autre variante de dispositif de rattrapage de jeu selon l'invention

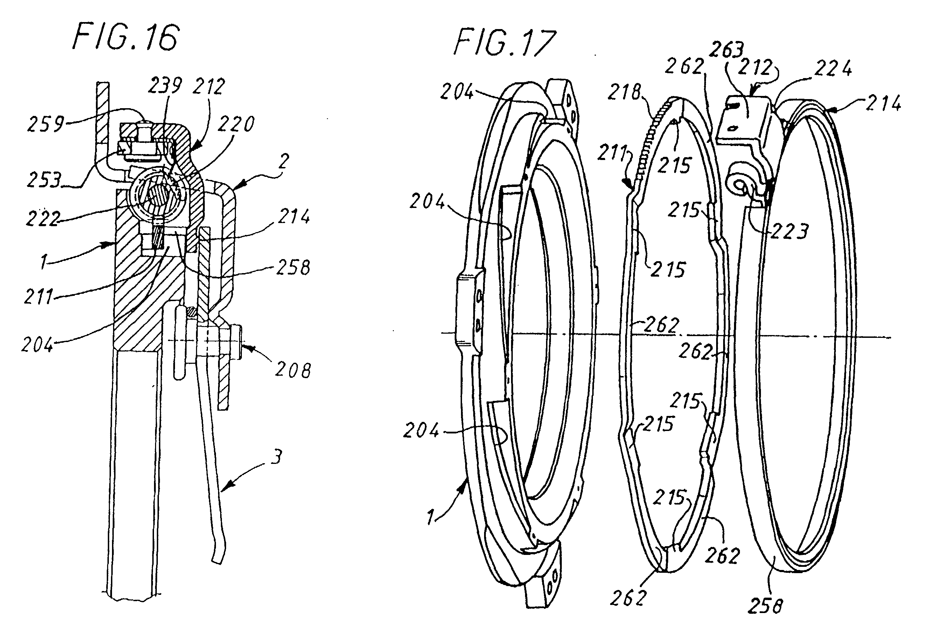

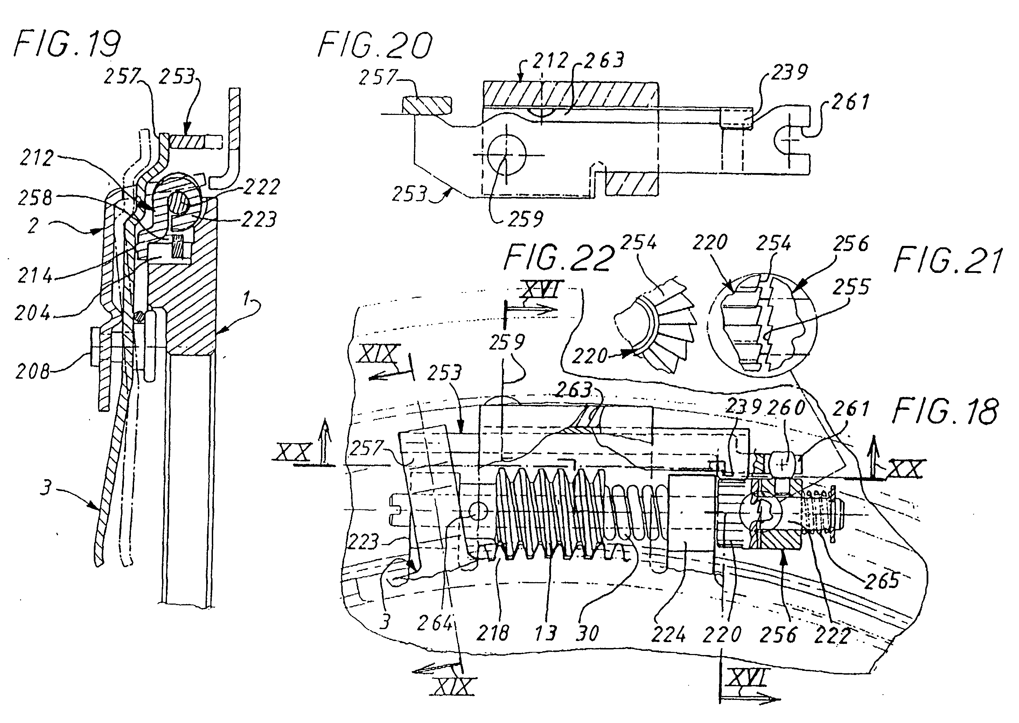

- la figure 16 est une vue partielle en coupe de l'embrayage, équipé de cette variante, selon XVI-XVI de la figure 18 ;
- la figure 17 est une vue éclatée en perspective montrant le plateau de pression, les moyens à rampes et les moyens d'appui de l'embrayage de la figure 16 ;
- la figure 18 est une vue partielle en plan de l'embrayage des figures 16 et 17, partiellement coupé et arraché ;
- la figure 19 est une vue en coupe selon XIX-XIX de la figure 18 ;
- la figure 20 est une vue en coupe selon XX-XX de la figure 18 ;
- la figure 21 est une vue agrandie de la loupe de la figure 18 ;
- la figure 22 est une vue partielle de la face latérale de la roue à rochet montrée sur la figure 18 notamment.

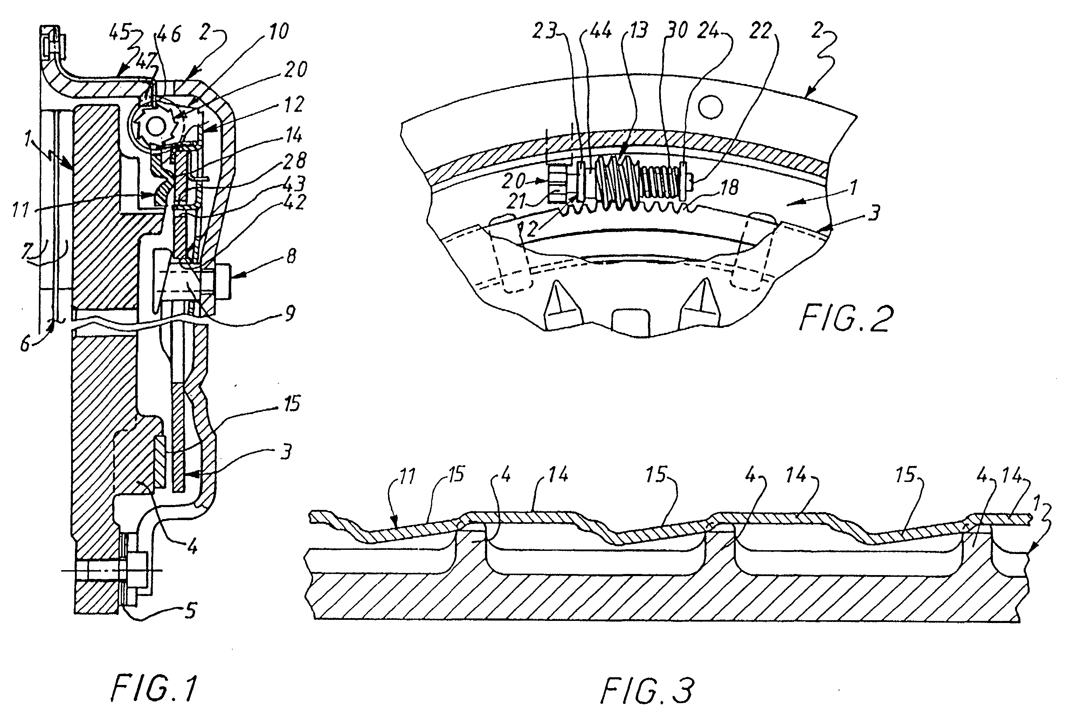

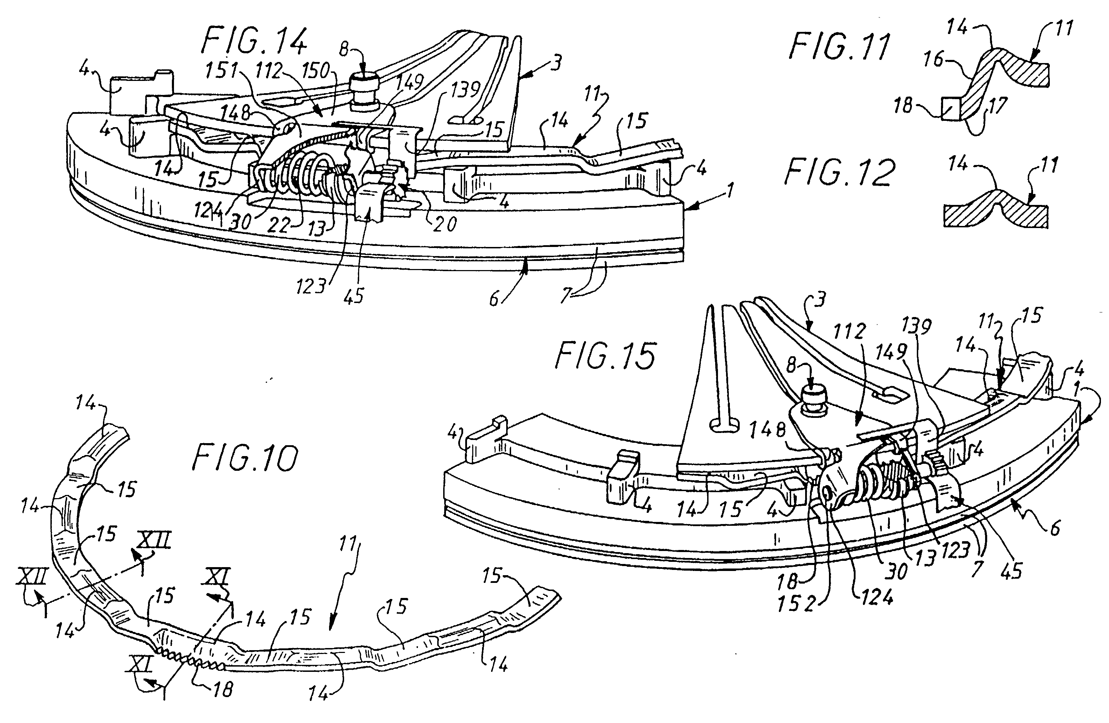

En se reportant aux figures 1 à 12, on voit un mécanisme d'embrayage à friction, notamment pour véhicule automobile, qui comprend un plateau de pression 1 destiné à coopérer avec un disque de friction 6, portant à sa périphérie externe des garnitures de friction 7, qui coopère lui-même avec un plateau de réaction. Le plateau de réaction, non représenté, est destiné à être calé en rotation sur un arbre menant, tel que le vilebrequin du moteur à combustion interne. Le disque de friction 6 est solidaire en rotation d'un arbre mené tel que l'arbre d'entrée de la boîte de vitesses.

Le plateau de pression 1 est solidaire en rotation d'un couvercle 2 de forme creuse par l'intermédiaire de languettes tangentielles 5 qui, élastiques, constituent en même temps des moyens de rappel du plateau de pression 1 vers le couvercle 2.

Le plateau de pression 1, tout en étant solidaire en rotation du couvercle 2, est donc déplaçable axialement par rapport au couvercle 2 sous la sollicitation de moyens élastiques à action axiale commandés, ici un diaphragme 3 monté articulé sur le couvercle 2 grâce à des colonnettes 8 portées par le fond du couvercle 2 troué centralement.

Pour compenser le jeu dû à l'usure des garnitures 6 du disque de friction 7, et dans une moindre mesure l'usure des plateaux de pression 1 et de réaction dont les faces, dites de friction, s'usent au contact des garnitures 6 du disque 7, il est prévu un dispositif de rattrapage de jeu 10.

Le dispositif de rattrapage de jeu 10 comprend des moyens à rampes 11 disposées circonférentiellement. Plus précisément, ces moyens à rampes 11, mieux visibles sur les figures 3, 10, 11 et 12, sont constitués d'un anneau en tôle découpée et emboutie de façon à présenter des rampes 15 alternées circonférentiellement avec des zones d'appui 14 constituées par l'arête supérieure arrondie de crevés disposés en arcs de cercle centrés sur l'axe de l'embrayage.

Le plateau de pression l présente, sur sa face tournée vers le fond du couvercle 2, des plots 4 répartis circonférentiellement à une distance l'un de l'autre qui correspond à celle qui sépare circonférentiellement deux rampes 15 successives, les plots 4 étant destinés à coopérer chacun avec une rampe 15.

Les moyens à rampes 11 sont placés axialement entre le diaphragme et le plateau de pression 1 en sorte que les plots 4 reçoivent les rampes 15 et le diaphragme 3 coopère avec les zones d'appui 14 qui constituent ainsi les moyens d'appui par l'intermédiaire desquels le diaphragme 3 agit sur le plateau de pression 1. Cette disposition est économique et simple.

L'une des zones d'appui 14 des moyens à rampes 11 est prolongée à sa périphérie externe par un rebord 16 incliné sur l'axe de l'embrayage se terminant selon un retour 17 transversal, c'est-à-dire s'étendant dans un plan perpendiculaire à l'axe de l'embrayage, muni à sa périphérie d'une denture 18, comme cela est mieux visible sur la figure 11.

Le dispositif de rattrapage de jeu 10 comprend par ailleurs une roue à rochet 20 à dents inclinées 21 solidaire d'un axe 22 qui porte également une vis sans fin 13 ; le filet et le pas de la vis sans fin 13 sont adaptés à la denture 18 des moyens à rampes 11 ; la vis sans fin 13 est amenée à coopérer avec la denture 18 dans les conditions qui seront décrites ci-après.

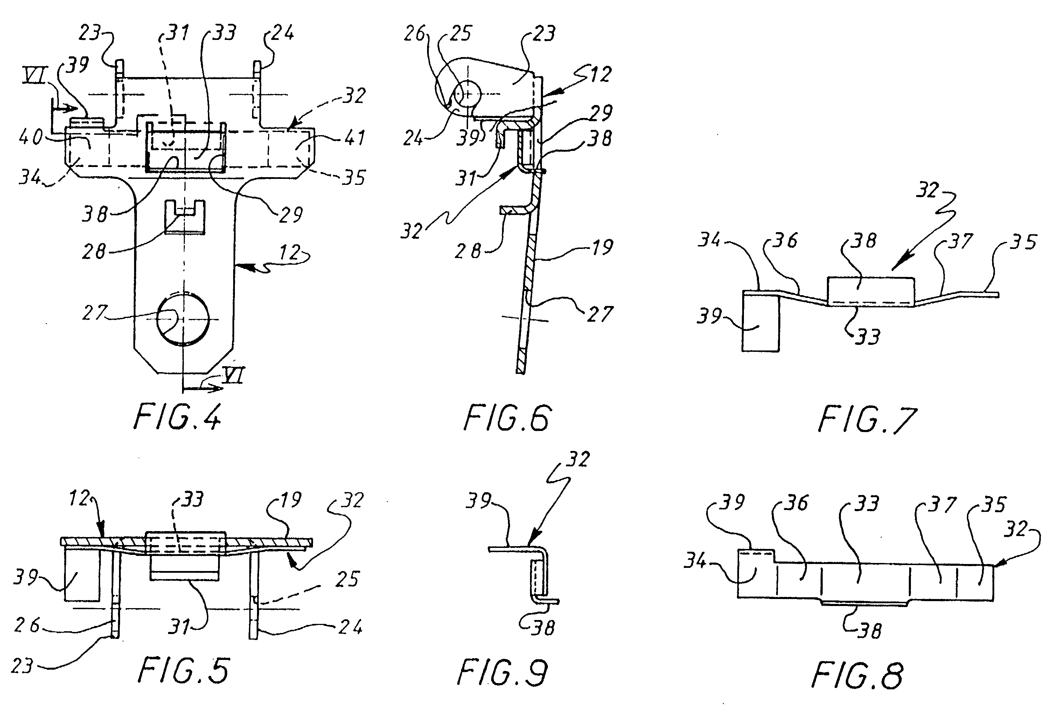

L'axe 22 de la roue à rochet 20 est porté à rotation par un support 12, mieux visible sur les figures 4 à 6, en tôle découpée et pliée, ayant un corps 19 pratiquement plan, en forme de croix, dont la partie supérieure porte deux ailes 23, 24 destinées à supporter l'axe 22 ; à cet effet, l'une des ailes, l'aile 24, porte un trou circulaire 25 adapté au diamètre de l'axe 22, tandis que l'autre aile, l'aile 23, porte une échancrure 26, à fond circulaire adapté au diamètre de l'axe 22, s'étendant en oblique par rapport au corps 1 9 du support 12.

La partie inférieure du corps 19 du support 12 présente une ouverture 27 circulaire adaptée à être traversée par le corps cylindrique 9 d'une colonnette 8 supportant le diaphragme 3.

En son centre, le corps 19 du support 12 porte une patte 28, obtenue ici par découpage et pliage, s'étendant perpendiculairement au corps 19 du même côté que les ailes 23 et 24.

Dans la zone située entre celle qui porte les ailes 23 et 24 et la patte 28, le corps 19 est également découpé pour réaliser un passage 29, globalement rectangulaire, et plié pour obtenir un crochet 31 dont l'extrémité est parallèle au corps 19 en étant dirigée vers la patte 28.

De part et d'autre du passage 29, le corps 19 présente des bras 40, 41.

Le support 12 est adapté à recevoir un organe élastique 32, mieux visible sur les figures 7 à 9 ; l'organe élastique 32 est une bande, ici métallique, de forme générale rectangulaire pliée ayant une partie centrale 33 et deux parties d'extrémité 34, 35 parallèles à la partie centrale 33 à laquelle elles sont raccordées par des parties obliques 36, 37 ; la partie centrale 33 porte sur sa tranche un rabat 38 qui est perpendiculaire à la partie centrale 33 et qui s'étend, par rapport à cette partie centrale 33, du côté où l'angle embrassé par les parties obliques 36, 37 est inférieur à 180°. L'une des parties d'extrémité, ici la partie 34, est légèrement plus large, du côté opposé à celui où est situé le rabat 38, en portant également sur sa tranche, perpendiculairement, un rabat constituant un cliquet anti-retour 39 dont le rôle apparaîtra ci-après.

Comme cela est visible sur les figures 4 à 6 qui montrent le support 12 équipé de l'organe élastique 32, celui-ci est disposé en sorte que ses parties d'extrémité 34, 35 coopèrent avec la face des bras 40, 41 du corps 19 tournée vers les ailes 23, 24 ; la partie centrale 33 de l'organe élastique 32 coopère par son bord supérieur, par rapport aux figures 4 et 6, avec la partie horizontale du crochet 31 vers laquelle elle est poussée élastiquement par le rabat 38 qui prend appui sur le bord inférieur du passage 29 ; dans cette position de l'organe élastique 32, sa partie centrale 33 est à distance du plan du passage 29, du fait de l'obliquité des parties obliques 36 et 37, et le cliquet anti-retour 39 est au droit du bord supérieur du bras 40, décalé latéralement par rapport à l'aile la plus proche, à savoir l'aile 23.

Le support 12 est adapté à être monté sur le diaphragme 3 avant que celui-ci ne soit solidarisé au couvercle ; le support 12 est placé sur la face extérieure du diaphragme 3 en faisant chevaucher le bord circonférentiel externe du diaphragme 3 par le crochet 31 du support 12 et de telle sorte que l'ouverture 27 du corps 19 du support 12 soit au droit d'un passage 42 du diaphragme 3 pour le corps 9 d'une colonnette 8 ; une fente 43 s'étendant circonférentiellement peut être prévue dans le diaphragme 3, comme cela est représenté, pour recevoir la patte 28 du corps 19 du support 12 et assurer ainsi son positionnement et son maintien dans le sens circonférentiel. I suffit alors de solidariser le diaphragme 3 au couvercle 2 en sertissant les colonnettes 8, comme habituellement, pour solidariser définitivement le support 12 au diaphragme 3.

Pour le positionnement du support 12 dans le sens circonférentiel, la fente 43 prévue dans le diaphragme 3 pourrait être supprimée et remplacée par une échancrure prévue sur le bord du diaphragme 3 dans laquelle prendrait place le crochet 31 du support 12 : bien entendu, selon cette variante non représentée, la patte 28 du support 12 serait supprimée également.

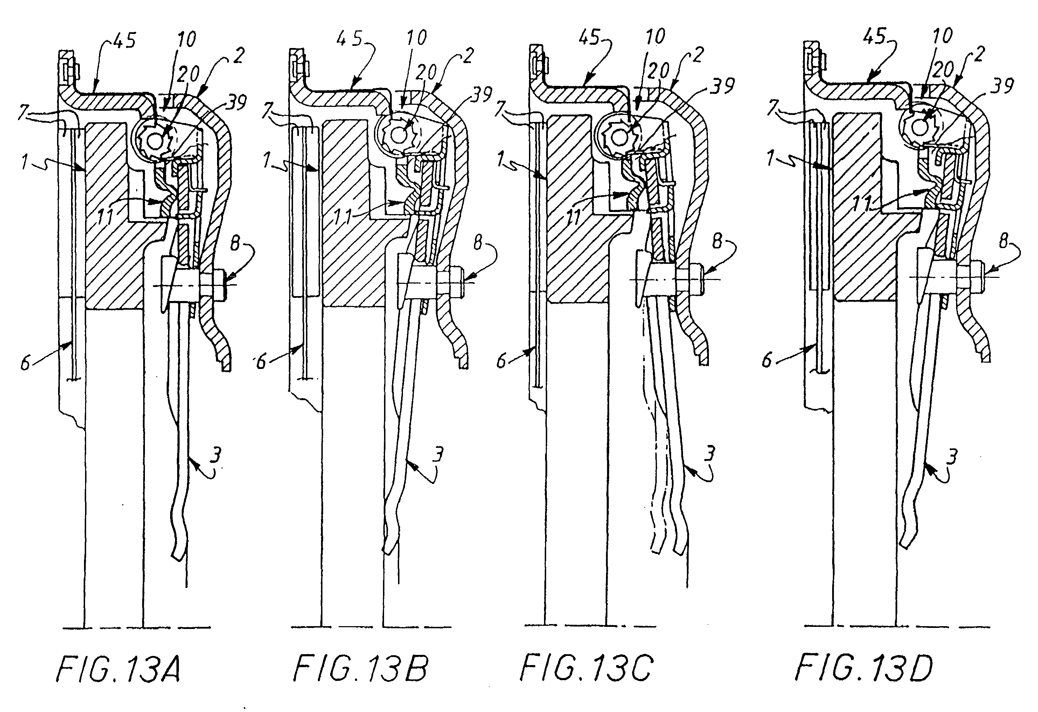

A légère distance de la roue à rochet 20, l'axe 22 porte une collerette 44 adjacente à la vis sans fin 13. Autour de l'axe 22, du côté opposé à celui où est placée la roue à rochet 20, par rapport à la vis sans fin 13, est placé un ressort hélicoïdal 30 constituant le moyen élastique de rattrapage, comme décrit ci-dessous ; l'extrémité libre de l'axe 22 est alors introduite dans le trou 25 de l'aile 24 du support 12. En comprimant le ressort 30, la partie de l'axe 22 comprise entre la collerette 44 et la roue à rochet 20 est alors introduite dans l'échancrure 26 de l'aile 23 du support 1 2 : dans cette position, la roue à rochet 20 est au droit du cliquet anti-retour 39 qui par coopération avec les dents 21 inclinées de la roue à rochet 20, d'une part, maintient élastiquement l'axe 22 au fond de l'échancrure 26 et, d'autre part, empêche de tourner la roue à rochet 20, ainsi que la vis sans fin 13, dans le sens contraire à celui des aiguilles d'une montre, par rapport aux figures 1 et 13A à 13D.

Le support 12, portant la roue à rochet 20, dont l'axe 22 supporte la vis sans fin 13 et le ressort hélicoïdal 30, étant solidaire du diaphragme 3, se déplace avec lui lors des opérations de débrayage et de réembrayage, et ce par rapport au couvercle 2 ; celui-ci porte à sa périphérie une lame élastique de butée 45 s'étendant pour une grande partie à l'extérieur du couvercle 2 auquel elle est fixée, ici par rivetage à la faveur du rebord radial de fixation du couvercle 2 au plateau de réaction, et ayant une extrémité 46 qui le traverse en s'étendant le long d'un retour transversal 47 pour coopérer avec les dents inclinées 21 de la roue à rochet 20 globalement de manière diamétralement opposée par rapport au cliquet anti-retour 39 ; on comprendra que, grâce à cette disposition, en déplaçant la roue à rochet 20 de la droite vers la gauche, par rapport à la figure 1, l'extrémité 46 de la lame 45, par coopération avec le retour transversal 47 du couvercle 2, joue le rôle d'un point fixe pour les dents 21 de la roue à rochet 20 de sorte que celle-ci est amenée à tourner dans le sens horaire. Lorsque la roue à rochet 20, au retour, est déplacée de la gauche vers la droite, l'élasticité de la lame 45 et l'inclinaison des dents 21 font que celle-ci soulèvent la lame 45, en étant maintenues fixes en rotation par la pression du cliquet anti-retour 39.

Le dispositif de rattrapage de jeu qui vient d'être décrit fonctionne comme suit.

La figure 13A représente l'embrayage engagé, les garnitures 7 du disque de friction 6 étant à l'état neuf et serrées entre le plateau de réaction, non représenté, et le plateau de pression 1. Dans cette position, la collerette 44 de l'axe 22 est en butée avec l'aile 23 du corps 19, poussée par le ressort hélicoïdal 30, comme représenté sur la figure 2 ; par ailleurs, l'extrémité de la lame 45 est au pied d'une dent de la roue à rochet 20 et le cliquet anti-retour 39 sur le sommet d'une dent, comme montré sur la figure 13A.

Lorsque l'embrayage est débrayé, le diaphragme 3 a basculé autour des colonnettes 8 entraînant à sa périphérie le support 12 vers le fond du couvercle 2 ; le support 12 dépassant radialement du diaphragme 3 par sa partie supérieure qui porte les ailes 23, 24, il peut se faire que le support 12 vienne buter contre le couvercle avant que le diaphragme n'ait atteint sa position de fin de course de débrayage. C'est la raison pour laquelle l'organe élastique 32 présente des parties obliques 36, 37 qui sont en fin de sa course écrasées par le diaphragme qui se détache de l'extrémité transversale du crochet 31 dans lequel il est monté avec jeu, comme cela est montré sur la figure 13B qui représente l'embrayage en fin de débrayage, les garnitures 7 du disque de friction 6 étant encore neuves. Lors du déplacement du support 12 par le diaphragme 3, l'extrémité de la lame élastique 45 a suivi la rampe inclinée constituée par la dent dans le pied de laquelle elle se trouvait dans l'étape précédente, les dents 21 de la roue à rochet 20 étant réalisées en sorte que, lors de cette course de débrayage garnitures neuves, l'extrémité de la lame 45 ne saute pas une dent, ainsi d'ailleurs que le cliquet anti-retour 39 qui, toujours sur le sommet de la même dent, maintient la roue à rochet 20.

Lorsque les garnitures 7 s'usent, comme on le sait le plateau de pression 1, toujours soumis à l'effort axial du diaphragme 3, se rapproche du plateau de réaction qui est fixe axialement comme le couvercle 2 ; la périphérie du diaphragme 3 se rapproche donc du plateau de réaction, donc de l'extrémité ouverte du couvercle 2, en entraînant dans son basculement le support 12 ; la roue à rochet 20 se rapproche également du plateau de réaction mais, comme l'extrémité de la lame 45 était en pied de dent avant usure, la roue à rochet 20 est en butée sur la lame 45 lorsqu'elle se déplace en cours d'usure. Dès lors, ladite roue 20 tourne autour de son axe dans le sens horaire, sens pour lequel le cliquet anti-retour 39 n'assure pas sa fonction mais peut sauter d'une dent à l'autre. L'embrayage engagé, garnitures usées, est représenté sur la figure 13C. Cet entraînement en rotation de la roue à rochet 20 conduit la vis sans fin 13 à tourner également sur son axe ; les moyens de rampes 11 étant immobilisés par rapport au couvercle 3 sous l'effet de la charge du diaphragme 3, la vis sans fin 13 qui engrène avec la denture 18 des moyens de rampes 11 se visse en quelque sorte sur cette denture 18 en comprimant le ressort hélicoïdal 30, le sens du filet de la vis sans fin 13 étant prévu en sorte qu'il en soit ainsi.

Lors de l'opération de débrayage qui suit la phase d'usure qui vient d'être décrite, le plateau de pression 1 libère les garnitures 7 en s'éloignant d'elles sous l'action des languettes tangentielles 5 qui le ramènent vers le fond du couvercle 2, ainsi que les moyens à rampes 11 en contact avec le diaphragme 3 par leurs zones d'appui 14 et avec les plots 4 du plateau de pression 1 par leurs rampes 15. Le ressort hélicoïdal 30 sollicite la vis sans fin 13 vers l'aile 23, qu'elle a quittée en phases d'usure, c'est-à-dire de la droite vers la gauche par rapport à la figure 2 ; la charge du diaphragme 3 n'étant plus appliquée sur les moyens à rampes 11, le seul effort à vaincre pour pouvoir faire tourner ces moyens à rampes 11 par rapport au plateau de pression 1 est l'effort de rappel des languettes tangentielles 5 ; si la charge du ressort hélicoïdal 30 est suffisante pour vaincre cet effort, alors le ressort 30 déplace la vis sans fin 13, empêchée de tourner sur elle-même par le cliquet anti-retour 39, qui entraînera la denture 18 : en tournant sur elles-mêmes, les rampes 15 des moyens à rampes 11, par coopération avec les plots 4 du plateau de pression 1, éloigneront le plateau de pression 1 du fond du couvercle 2, augmentant ainsi la distance axiale entre la face de travail du plateau de pression 1 et les zones d'appui 14 des moyens à rampes 11, rattrapant ainsi le jeu dû à l'usure des garnitures 7. La charge du ressort hélicoïdal 30 étant fonction de la quantité dont il aura été comprimé par la vis sans fin 13 durant les phases d'usure, on voit que plusieurs opérations d'embrayage et de débrayage peuvent être nécessaires avant que le dispositif de rattrapage de jeu 10 n'entre en phase de rattrapage proprement dite, ceci étant fonction du dimensionnement relatif des pièces concernées. A titre d'exemple, celles-ci peuvent être réalisées de telle sorte que cette phase de rattrapage proprement dite n'intervienne qu'après une usure correspondant à trois dixièmes de millimètres. Par ailleurs, on voit également qu'il est impossible au dispositif 10 selon l'invention de rattraper un quelconque jeu sans qu'il y ait une usure effective.

Dans la variante qui vient d'être décrite, l'axe 22, la vis sans fin 13, la collerette 44 et la roue à rochet 21 sont d'une seule pièce ; bien entendu, la vis sans fin 13 pourrait être une pièce distincte et pourvue d'un alésage, ledit alésage et l'axe lui-même étant agencés de telle sorte que la vis sans fin peut coulisser le long de l'axe tout en étant solidaire en rotation dudit axe.

Les figures 14 et 15 représentent une variante de dispositif de rattrapage de jeu. Sur ces figures, les pièces à celles précédemment décrites, ou jouant le même rôle, sont désignées par la même référence, ou par cette référence augmentée de cent ; dès lors, cette variante sera succinctement décrite. Ici, le support 112 comporte un flasque 150 de forme globalement triangulaire serti sur le diaphragme 3 par une colonnette 8, deux crochets 148, 149, à distance circonférentielle l'un de l'autre, enserrant le diaphragme 3 à sa périphérie ; le flasque 1 50 est prolongé extérieurement par une casquette 151 plus inclinée sur l'axe de l'embrayage que ne l'est le flasque 150 ; la casquette 151 porte latéralement, sur chacun de ses côtés, une aile, respectivement 123, 124 ; les ailes 123, 124 supportent, comme précédemment les ailes 23, 24, l'axe 22 équipé de la roue à rochet 20, la vis sans fin 13, le ressort 30 ; la roue à rochet 20 est au droit de la lame élastique 45 portée par le couvercle, non représenté sur ces figures, et du cliquet anti-retour 139, ici assujetti au flasque 150 du support 112, par exemple par soudage. L'extrémité libre de l'axe 22 est aplatie en 152 en sorte que l'on dispose d'un sous-ensemble, constitué par le support 112 équipé du cliquet anti-retour 139, de l'axe 22 portant la roue à rochet 20, là vis sans fin 13 et le ressort 30, prêt à être monté sur le diaphragme et serti par une colonnette 8.

Les figures 16 à 22 montrent une variante de dispositif de rattrapage selon l'invention ; sur ces figures, les pièces identiques à celles précédemment décrites à propos des figures 1 à 13, ou jouant le même rôle, sont désignées par la même référence, ou par cette référence augmentée de deux cents.

Le fonctionnement de cette variante étant identique à celui des variantes précédentes, seules seront décrites les particularités constructives qui distinguent cette variante.

Comme le montre bien la figure 17, selon cette variante, les moyens à rampes 211 sont munis de rampes 21 5 et de parties planes transversales 262, alternées circonférentiellement, et d'une denture 218 ; les moyens d'appui 214 pour le diaphragme 3 sont prévus sur une pièce annulaire indépendante des moyens à rampes 211 et dont la jupe cylindrique 258 est adaptée à coopérer axialement avec les parties planes transversales 262 des moyens à rampes 211 dont les rampes 21 5 sont adaptées à coopérer avec, ici, des rampes complémentaires 204 du plateau de pression 1 ; bien entendu, ces rampes complémentaires 204 pourraient être remplacées par des plots comme dans la variante précédente, et réciproquement d'ailleurs.

Selon cette variante également, un support 212 est solidaire des moyens d'appui 214. Le support 212 comprend une sorte de casquette, à section en L, dont la paroi frontale 263 s'étend axialement, flanquée latéralement de deux ailes ou oreilles 223, 224 destinées à supporter un axe 222 ; le support 212 est issu de la jupe 258 des moyens d'appui 214 pour le diaphragme 3.

Comme cela est visible sur la figure 18, l'axe 222 est solidaire d'une roue à rochet 220 ; après avoir été introduit dans l'oreille 224, roue à rochet 220 à l'extérieur, le ressort hélicoïdal 30 puis la vis sans fin 13 sont enfilés sur l'axe introduit ensuite dans l'oreille 223 ; une goupille 264 solidarise en rotation la vis sans fin 13 et l'axe 222. La roue à rochet 220 coopère avec un cliquet anti-retour 239 porté par la paroi frontale 263 du support 212.

La roue à rochet 220 porte, sur sa face transversale opposée à celle qui est tournée vers l'oreille 224, des dents 254 inclinées circonférentiellement, visibles sur la loupe de la figure 21 et sur la figure 22 ; l'axe 222 est prolongé au-delà de la roue à rochet 220 et porte à rotation, sur cette extrémité, une noix 256 dont la face tournée vers la roue à rochet 220 porte des dents 255 conjuguées par rapport aux dents 254 et visibles sur la loupe de la figure 21 ; un léger ressort 265 assure la coopération des dents 254 et 255, notamment dans le sens menant, la roue à rochet 220 et la noix 256 jouant le rôle, grâce aux dents 254, 255, d'un accouplement unidirectionnel entre l'axe 222 et un levier 253, comme cela va être décrit maintenant.

La noix 256 porte à sa périphérie un pivot radial 260 en forme générale d'olive que chevauche l'extrémité du levier 253 grâce à une échancrure 261 qui y est ménagée ; le levier 253 est articulé autour d'un axe 259 porté par la paroi frontale 263 du support 212 ; l'autre extrémité du levier 253, opposée à celle qui porte l'échancrure 261, coopère avec une patte radiale 257 que présente le diaphragme 3 à sa périphérie pour la manoeuvre du levier 253 en phases d'usure ; en effet, la patte 257 du diaphragme 3 étant au contact du levier 253 en un point situé sur un rayon plus grand que celui sur lequel sont placés les moyens d'appui 214 qui, comme on le sait, se déplacent axialement en phases d'usure, l'effet de l'usure sur le levier 253 est ainsi multiplié ; un autre effet multiplicateur est obtenu à travers le levier 253 dont l'axe 259 est plus proche du point de contact avec la patte radiale 257 qu'il ne l'est de l'échancrure 261. Ainsi, par le jeu de ces divers bras de levier, on peut par exemple s'arranger pour que, lors d'une course normale de débrayage et d'embrayage sans usure les mêmes dents 254 et 255 restent en contact ; en phases d'usure, on saute d'une dent à l'autre, ce qui chaque fois fait tourner la vis sans fin 13 qui progressivement comprime le ressort hélicoïdal 30 en se vissant sur la denture 218 embrayage embrayé ; lorsque la charge du ressort 30 atteint celle des languettes tangentielles qui rappellent le plateau de pression 1, le ressort hélicoïdal 30 déplace en translation la vis sans fin 13 qui déplace en rotation les moyens à rampes 211, embrayage débrayé, comme dans les variantes précédentes.

On appréciera, à propos des variantes des figures 1 à 15, que le nombre de pièces est réduit puisque les moyens à rampes 11 portent les moyens d'appui 14 pour le diaphragme 3. Il y a également, selon ces variantes, un effet multiplicateur : ainsi, pour une course de débrayage donnée, lors du réembrayage à partir de la position représentée à la figure 13D, l'embrayage se retrouve dans la position montrée figure 13A.

Ainsi qu'on l'aura compris, les usures sont détectées grâce à la lame 45, ou à la patte 257 ; ainsi, le détecteur d'usure 45, 257 peut être porté par différents composants de l'embrayage.

## Revendications

1. Embrayage à friction, notamment pour véhicule automobile, du genre comportant un plateau de réaction destiné à être calé en rotation sur un arbre menant, un disque de friction (6), portant à sa périphérie externe des garnitures de friction (7), destiné à être calé en rotation sur un arbre mené, un plateau de pression (1), un couvercle (2) fixé sur le plateau de réaction, des moyens élastiques à action axiale (3) agissant entre, d'une part, le couvercle (2) et, d'autre part, le plateau de pression (1) par l'intermédiaire de moyens d'appui (14), le plateau de pression (1) étant solidaire en rotation du couvercle (2) tout en pouvant se déplacer axialement par rapport à lui et étant soumis à l'action de moyens élastiques de rappel (5) rappelant le plateau de pression (1) axialement vers le couvercle (2), ledit embrayage comportant également un dispositif de rattrapage de jeu (10) comprenant des moyens à rampes (11) disposées circonférentiellement, placés axialement entre les moyens d'appui (14) et le plateau de pression (1) et adaptés à être entraînés en rotation grâce à une denture (18) qu'ils portent à leur périphérie et avec laquelle coopère une vis sans fin (13) disposée tangentiellement, **caractérisé par le fait que** sont prévus :
- des moyens d'entraînement en rotation (20, 45) de la vis sans fin (13) rendus opérationnels par l'usure des garnitures de friction (7) lorsque l'embrayage est embrayé,
- des moyens anti-retour (20, 39) empêchant la vis sans fin (13) de tourner dans le sens contraire de celui dans lequel elle est entraînée en rotation par les moyens d'entraînement en rotation (20, 45) lorsqu'ils sont opérationnels,
- et **par le fait que** la vis sans fin (13) est montée à coulissement selon son axe en étant soumise à l'action d'un moyen élastique dit de rattrapage (30), et se déplace axialement lorsqu'elle est entraînée en rotation par l'usure des garnitures de friction (7), chargeant ainsi le moyen élastique de rattrapage,ladite charge du moyen élastique de rattrapage (30) croissant avec l'usure des garnitures de friction (7),
- un déplacement axial de la vis sans fin en sens inverse étant obtenu par action du moyen élastique de rattrapage (30) lorsque sa charge est suffisamment élevée pour surmonter l'effort axial dû aux moyens élastiques de rappel (5) auxquels sont soumis lesdits moyens à rampes (11), l'embrayage étant débrayé, ce déplacement entraînant en rotation circonférentielle lesdits moyens à rampes (11).

2. Embrayage selon la revendication 1, **caractérisé par le fait que** les moyens élastiques à action axiale (3) sont constitués par un diaphragme.

3. Embrayage selon la revendication 2, **caractérisé par le fait que** le diaphragme (3) est solidarisé au couvercle (2) par des colonnettes (8).

4. Embrayage selon l'une des revendications 1 à 3, **caractérisé par le fait que** les moyens à rampes (11) sont constitués d'un anneau présentant des rampes (15) inclinées et réparties circonférentiellement.

5. Embrayage selon la revendication 4, **caractérisé par le fait que** le plateau de pression (1) présente des plots (4) ou des rampes (204) destinés à coopérer avec les rampes (15) des moyens à rampes (11).

6. Embrayage selon l'une des revendications 1 à 5, **caractérisé par le fait que** le moyen élastique de rattrapage (30) est un ressort hélicoïdal entourant un axe (22) qui porte la vis sans fin (13).

7. Embrayage selon l'une des revendications 1 à 6, **caractérisé par le fait que** l'axe (22) portant la vis sans fin (13) et le ressort hélicoïdal (30) est supporté par deux ailes (23, 24 ; 123, 124 ; 223, 224) d'un support (12, 112, 212).

8. Embrayage selon la revendication 7, **caractérisé par le fait que** le support (12, 112) est porté par le diaphragme (3).

9. Embrayage selon la revendication 8, **caractérisé par le fait que** les moyens d'entraînement en rotation de la vis sans fin (13) sont constitués par une roue à rochet (20) solidaire de l'axe (22) qui porte la vis sans fin (13) et qui est adaptée à coopérer avec une lame (45) portée par le couvercle (2).

10. Embrayage selon la revendication 9, **caractérisé par le fait que** lesdites rampes (15) des moyens à rampes (11) sont alternées circonférentiellement avec des zones d'appui (14) constituant lesdits moyens d'appui pour le diaphragme (3).

11. Embrayage selon la revendication 9, **caractérisé par le fait que** le support (212) est porté par les moyens d'appui (214).

12. Embrayage selon la revendication 11 ,
**caractérisé par le fait que** les moyens d'entraînement en rotation de la vis sans fin (13) sont constitués par une roue à rochet (220) solidaire de l'axe (22) qui porte la vis sans fin (13) et munie sur sa face transversale de dents inclinées circonférentiellement (254) coopérant avec des dents conjuguées (255) portées par la face transversale en regard d'une noix (256) montée tournante sur ledit axe (22) et adaptée à être entraînée en rotation par l'extrémité d'un levier (253) articulé sur le support (212) et dont l'autre extrémité coopère avec une patte radiale (257) du diaphragme (3).

13. Embrayage selon l'une des revendications 9 à 12, **caractérisé par le fait que** les moyens anti-retour sont constitués par un cliquet (39, 239) qui coopère avec la roue à rochet (20,220).

## Patentansprüche

1. Reibungskupplung, insbesondere für Kraftfahrzeuge, umfassend eine Gegenanpreßplatte, die zur drehfesten Anbringung an einer treibenden Welle bestimmt ist, eine an ihrem äußeren Umfang Reibbeläge (7) tragende Kupplungsscheibe (6), die zur drehfesten Anbringung an einer getriebenen Welle bestimmt ist, eine Druckplatte (1), einen an der Gegenanpreßplatte befestigten Deckel (2), axial wirksame elastische Mittel (3), die zwischen dem Deckel (2) einerseits und der Druckplatte (1) andererseits über Auflagemittel (14) wirken, wobei die Druckplatte (1) drehfest mit dem Deckel (2) verbunden ist, während sie sich axial im Verhältnis zu diesem verschieben kann und der Wirkung von elastischen Rückstellmitteln (5) ausgesetzt ist, die die Druckplatte (1) axial zum Deckel (2) hin zurückstellen, wobei die besagte Kupplung außerdem eine Spielausgleichvorrichtung (10) umfaßt, die Mittel mit umfangsmäßig angeordneten Rampen (11) enthält, die axial zwischen den Auflagemitteln (14) und der Druckplatte (1) angebracht sind und dank einer Zahnung (18) drehend angetrieben werden können, die sie an ihrem Umfang tragen und mit der eine tangential angeordnete Schnecke (13) zusammenwirkt,
**dadurch gekennzeichnet,**
**daß** folgende Teile vorgesehen sind:
- Drehantriebsmittel (20, 45) für die Schnecke (13), die durch den Verschleiß der Reibbeläge (7) bei eingerückter Kupplung betriebsbereit werden,
- Rückdrehsicherungsmittel (20, 39), welche die Schnecke (13) daran hindern, sich entgegengesetzt zu der Richtung zu drehen, in der sie durch die Drehantriebsmittel (20, 45) drehend angetrieben wird, wenn sie betriebsbereit sind,
- und dadurch, daß die Schnecke (13) entlang ihrer Achse verschiebbar gelagert ist, wobei sie der Einwirkung eines als Ausgleichmittel bezeichneten elastischen Mittels (30) ausgesetzt ist, und sich axial verschiebt, wenn sie durch den Verschleiß der Reibbeläge (7) drehend angetrieben wird, wodurch sie das elastische Ausgleichmittel belastet, wobei sich die besagte Belastung des elastischen Ausgleichmittels (30) mit zunehmendem Verschleiß der Reibbeläge (7) erhöht,
- wobei eine axiale Verschiebung der Schnecke in der entgegengesetzten Richtung durch die Wirkung des elastischen Ausgleichmittels (30) herbeigeführt wird, wenn seine Belastung ausreichend hoch ist, um die axiale Beanspruchung zu überwinden, die durch die elastischen Rückstellmittel (5) bedingt ist, denen die besagten Rampenmittel (11) ausgesetzt sind, während die Kupplung ausgerückt ist, wobei diese Verschiebung die besagten Rampenmittel (11) in einer Umfangsdrehung antreibt.

2. Kupplung nach Anspruch 1, **dadurch gekennzeichnet, daß** die axial wirksamen elastischen Mittel (3) aus einer Membranfeder bestehen.

3. Kupplung nach Anspruch 2, **dadurch gekennzeichnet, daß** die Membranfeder (3) durch Distanzbolzen (8) mit dem Deckel (2) verbunden ist.

4. Kupplung nach einem der Ansprüche 1 bis 3, **dadurch gekennzeichnet, daß** die Rampenmittel (11) aus einem Ring bestehen, der geneigte und umfangsmäßig verteilte Rampen (15) aufweist.

5. Kupplung nach Anspruch 4, **dadurch gekennzeichnet, daß** die Druckplatte (1) Sockel (4) oder Rampen (204) aufweist, die dazu bestimmt sind, mit den Rampen (15) der Rampenmittel (11) zusammenzuwirken.

6. Kupplung nach einem der Ansprüche 1 bis 5, **dadurch gekennzeichnet, daß** das elastische Ausgleichmittel (30) eine Schraubenfeder ist, die eine Achse (22) umgibt, welche die Schnecke (13) trägt.

7. Kupplung nach einem der Ansprüche 1 bis 6, **dadurch gekennzeichnet, daß** die Achse (22), welche die Schnecke (13) und die Schraubenfeder (30) trägt, durch zwei Schenkel (23, 24; 123, 124; 223, 224) eines Trägers (12, 112, 212) gelagert ist.

8. Kupplung nach Anspruch 7, **dadurch gekennzeichnet, daß** der Träger (12, 112) an der Membranfeder (3) angebracht ist.

9. Kupplung nach Anspruch 8, **dadurch gekennzeichnet, daß** die Drehantriebsmittel der Schnecke (13) aus einem Sperrzahnrad (20) bestehen, das fest mit der Achse (22), die die Schnecke (13) trägt, verbunden ist und mit einer am Deckel (2) angebrachten Leiste (45) zusammenwirken kann.

10. Kupplung nach Anspruch 9, **dadurch gekennzeichnet, daß** sich die besagten Rampen (15) der Rampenmittel (11) in Umfangsrichtung mit Auflagebereichen (14) abwechseln, die die besagten Auflagemittel für die Membranfeder (3) bilden.

11. Kupplung nach Anspruch 9, **dadurch gekennzeichnet, daß** der Träger (212) an den Auflagemitteln (214) angebracht ist.

12. Kupplung nach Anspruch 11, **dadurch gekennzeichnet, daß** die Drehantriebsmittel der Schnecke (13) aus einem Sperrzahnrad (220) bestehen, das fest mit der Achse (22), die die Schnecke (13) trägt, verbunden und an seiner Querfläche mit umfangsmäßig geneigten Zähnen (254) versehen ist, die mit entsprechenden Zähnen (255) zusammenwirken, die an der gegenüberliegenden Querfläche einer Muffe (256) angebracht sind, die drehbar auf der besagten Achse (22) gelagert ist und durch das Ende eines am Träger (212) angelenkten Hebels (253) drehend angetrieben werden kann, dessen anderes Ende mit einem radialen Ansatz (257) der Membranfeder (3) zusammenwirkt.

13. Kupplung nach einem der Ansprüche 9 bis 12, **dadurch gekennzeichnet, daß** die Rückdrehsicherungsmittel aus einer Sperrklinke (39, 239) bestehen, die mit dem Sperrzahnrad (20, 220) zusammenwirkt.

## Claims

1. Friction clutch, notably for a motor vehicle, of the type having a reaction plate intended to be fixed with respect to rotation to a driving shaft, a friction disc (6), carrying friction linings (7) at its external periphery, ihtended to be fixed with respect to rotation to a driven shaft, a pressure plate (1), a cover (2) fixed to the reaction plate, axially acting resilient means (3) acting between on the one hand the cover (2) and on the other hand the pressure plate (1) by means of abutment means (14), the pressure plate (1) being fixed with respect to rotation to the cover (2) whilst being able to move axially with respect to it and being subjected to the action of resilient return means (5) returning the pressure plate (1) axially towards the cover (2), the said clutch also having a device for taking up clearance (10) comprising circumferentially disposed ramp means (11), placed axially between the abutment means (14) and the pressure plate (1) and adapted to be driven in rotation by means of a set of teeth (18) which they carry at their periphery and with which a tangentially disposed worm (13) cooperates, **characterised by** the fact that there are provided:
- means (20, 45) of driving the worm (13) in rotation, made operational by the wear on the friction linings (7) when the clutch is engaged,
- non-return means (20, 39) preventing the worm (13) from turning in the direction opposite to the one in which it is driven in rotation by the means (20, 45) of driving in rotation when they are operational, and
- by the fact that the worm (13) is mounted for sliding along its axis whilst being subjected to the action of a resilient so-called take-up means (30), and moves axially when it is driven in rotation by the wear on the friction linings (7), thus loading the resilient take-up means, the said load on the resilient take-up means (30) increasing with the wear on the friction linings (7),
- an axial movement of the worm in the opposite direction being obtained through the action of the resilient take-up means (30) when its load is sufficiently high to overcome the axial force due to the resilient return means (5) to which the said ramp means (11) are subjected, the clutch being disengaged, this movement driving the said ramp means (11) in circumferential rotation.

2. Clutch according to Claim 1, **characterised by** the fact that the axially acting resilient means (3) consist of a diaphragm.

3. Clutch according to Claim 2, **characterised by** the fact that the diaphragm (3) is fixed to the cover (2) by small columns (8).

4. Clutch according to one of Claims 1 to 3, **characterised by** the fact that the ramp means (11) consist of an annulus having inclined and circumferentially distributed ramps (15).

5. Clutch according to Claim 4, **characterised by** the fact that the pressure plate (1) has studs (4) or ramps (204) intended to cooperate with the ramps (15) on the ramp means (11).

6. Clutch according to one of Claims 1 to 5, **characterised by** the fact that the resilient take-up means (30) is a helical spring surrounding a shaft (22) which carries the worm (13).

7. Clutch according to one of Claims 1 to 6, **characterised by** the fact that the shaft (22) carrying the worm (13) and the helical spring (30) is supported by two wings (23, 24; 123, 124; 223, 224) of a support (12, 112, 212).

8. Clutch according to Claim-7, **characterised by** the fact that the support (12, 112) is carried by the diaphragm (3).

9. Clutch according to Claim 8, **characterised by** the fact that the means of driving the worm (13) in rotation consist of a ratchet wheel (20) fixed to the shaft (22) carrying the worm (13) and which is adapted to cooperate with a blade (45) carried by the cover (2).

10. Clutch according to Claim 9, **characterised by** the fact that the said ramps (15) of the ramp means (11) alternate circumferentially with abutment areas (14) constituting the said abutment means for the diaphragm (3).

11. Clutch according to Claim 9, **characterised by** the fact that the support (212) is carried by the abutment means (214).

12. Clutch according to Claim 11, **characterised by** the fact that the means of driving the worm (13) in rotation consist of a ratchet wheel (220) fixed to the shaft (22) carrying the worm (13) and provided on its transverse face with circumferentially inclined teeth (254) cooperating with conjugate teeth (255) carried by the opposite transverse face of a nut (256) rotatably mounted on the said shaft (22) and adapted to be driven in rotation by the end of a lever (253) articulated on the support (212) and whose other end cooperates with a radial lug (257) on the diaphragm (3).

13. Clutch according to one of Claims 9 to 12, **characterised by** the fact that the non-return means consist of a pawl (39, 239) which cooperates with the ratchet wheel (20, 220).
